# EUROPEAN PATENT SPECIFICATION

(11) **EP 3 378 336 B1**
(45) Date of publication and mention of the grant of the patent: **25.09.2019**
(21) Application number: 18000261.0
(22) Date of filing: 15.03.2018
(51) Int. Cl.: A23N 5/00

(54) **METHOD AND DEVICE FOR SEPARATING FRUITS FROM WOODEN SHELLS OF ALMONDS**
VERFAHREN UND VORRICHTUNG ZUM TRENNEN VON FRÜCHTEN VON HOLZSCHALEN VON MANDELN
PROCÉDÉ ET DISPOSITIF POUR SÉPARER LES AMANDES DES COQUES

(30) Priority: 21.03.2017 IT 201700030607
(43) Date of publication of application: 26.09.2018
(73) Proprietor: CALA' S.R.L., 93100 Caltanissetta (IT)
(72) Inventor: Cala', Cataldo, 93100 Caltanissetta (IT)
(74) Representative: Garavelli, Paolo

(56) References cited:
- WO-A1-2015/166116
- ES-A1- 2 594 507
- US-A- 4 504 505

## Description

The present invention refers to a device adapted to separate fruits from wooden shells of almonds, after the almonds have been squashed by a suitable shredding machine.

The separation of fruits from broken shells has always been a serious problem for companies working dried fruits, also because the specific weight and the sizes of shells and fruits are almost the same.

Currently, there is not a really valid system which solves the problem completely. All currently known method manage to separate the product, but not perfectly, through several passes.

The most use methods provide for sieving, venting or sucking, but can be used in practice with limited results in case of almonds, because size and weight of these fruits are not different enough from those of the shells.

Another method provides for the use of machines equipped with optical devices adapted to detect the color differences between shells and fruits, during a pass of the product to be selected in suitable raceways. The material with different color is expelled with a jet of compressed air. The main inconvenience of such method consists in that air takes away both the shell and part of the fruits, so that, in order to obtain an adequate selection, it is necessary to pass the fruits many times till a clean product is obtained. These many passes stress the fruits and damage them.

Another method provides for a suction, which removes the lighter shells, in machines with a device with needles, which extract the fruit by transfixing the fruit itself, but not the shells since they are harder. Also in this case, fruits are damaged: in fact, oil goes out of holes made by the machine.

Patent WO2015/166116 discloses a more recent method, which consists in sliding shells and fruits along a rigid chute, which strongly accelerates the grains. A sort of ramp is placed at the base of such slanted path, composed of a section of path which is curved upwards and scored along the product sliding direction. The function of scoring is conferring to the ramp such a surface roughness that fruits and shells have a different sliding friction coefficient. The product accelerates along the chute, reaching such a speed that, arriving at the ramp, which is in the bottom part of the path, it performs a jump. Due to the different friction coefficient, fruits and shells, going along the ramp, slow down in a different way their outlet speed from the ramp itself. In particular, the shells goes out of the ramp at a higher speed than the fruits, so that they will fall down further than the fruits. By arranging collecting means at suitable distances from the ramp outlet edge, fruits will be separated from shells.

An inconvenience of this method consists in that the excessive descent speed of the product creates in the ramp a limited capability of differentiating the speeds so that, during the jump, some shells end with the fruits, while part of the fruits jump at the same distance as of the shells; this is mainly due to a quick and disordered descent, creating both in the chute and in the ramp several contacts between shells and fruits. To obtain a good selection, it is necessary to pass the product many times, with the known negative consequences on the quality of the end product and, obviously, on the production costs.

The limited capability of differentiating for the ramp is due to the fact that the product slides along the slanted path disorderly, and that the ramp itself imposes a sudden variation of the upward trajectory. The effect of these two factors is that the product is not arranged on the surface of the ramp forming a single layer. It follows that only the products in contact with the surface will be subjected to a different friction and, therefore, only these products in contact will be differentiated in their sliding speed, and therefore selected. This explains the reason why several passes are needed.

Object of the present invention is solving the above prior art problems by providing a device adapted to separate fruits from wooden shells of almonds, after the almonds have been squashed by suitable shredding machines.

The above and other objects and advantages of the invention, as will appear from the following description, are obtained with a device, as claimed in claim 1.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:
- Figures 1 and 2 show the working diagram of the device according to the present invention; and
- Figure 3 shows a detail of the device of the invention.

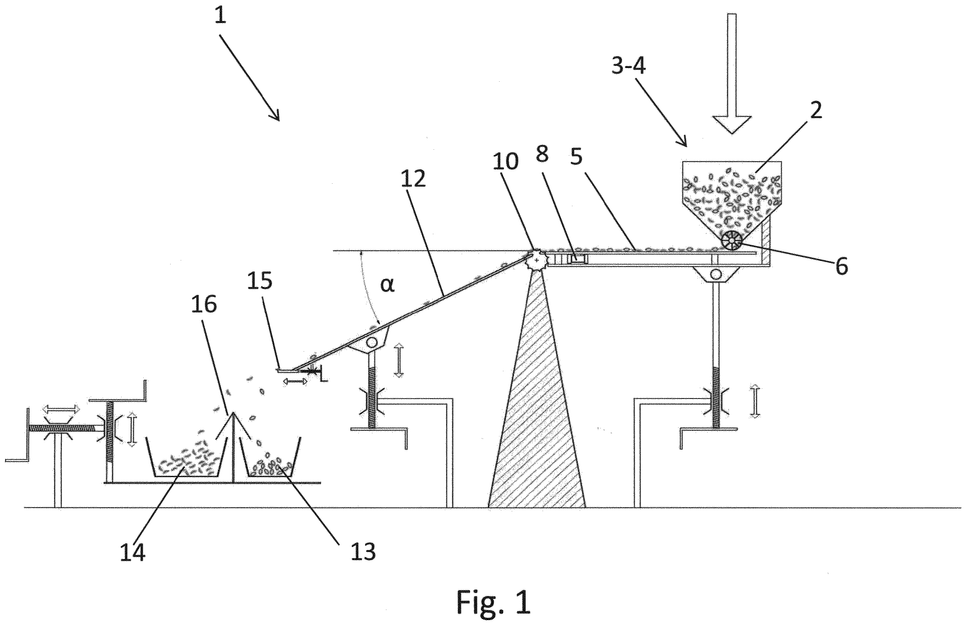

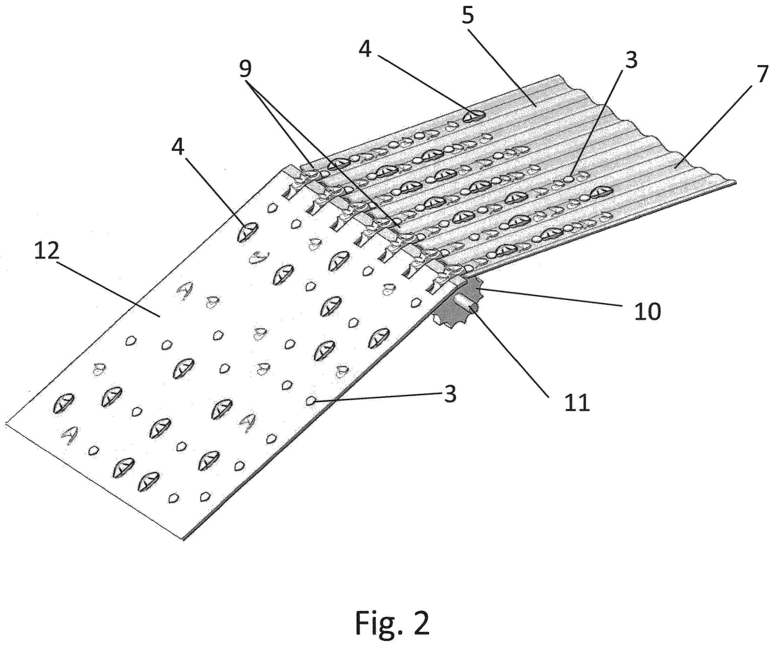

With reference to Figures 1 and 2, (1) designates a device for separating fruits from wooden shells of almonds, according to the invention.

This device (1) comprises an hopper (2) in which the products to be separated are loaded, namely the fruits (3) and the broken shells(4) coming from suitable shredding machines, of a known type.

The hopper (2) deposits the fruits (3) and the shells (4) on a vibrating plane (5), substantially horizontal, through a suitable dosing device (6) of a known type, composed, for example, of a roller with rubber blades and adjustable revolution speed. Such dosing device (6) has the function of dosing the right amount of product, so that the products themselves are deposited in a single layer on the vibrating plane (5).

The surface of the vibrating plane (5) is equipped with a plurality of small longitudinal channels (7). The vibrating plane (5) is subjected to the action of a vibrating motion (8), which gives the plane (5) a longitudinal vibration.

Due to the vibrations, the product, composed of the fruits (3) and the broken shells (4), is aligned in the raceways (7) with the grains, one behind the other, and advances more or less quickly, according to the vibration frequency, adjustable through an electric control system of a known type (not shown).

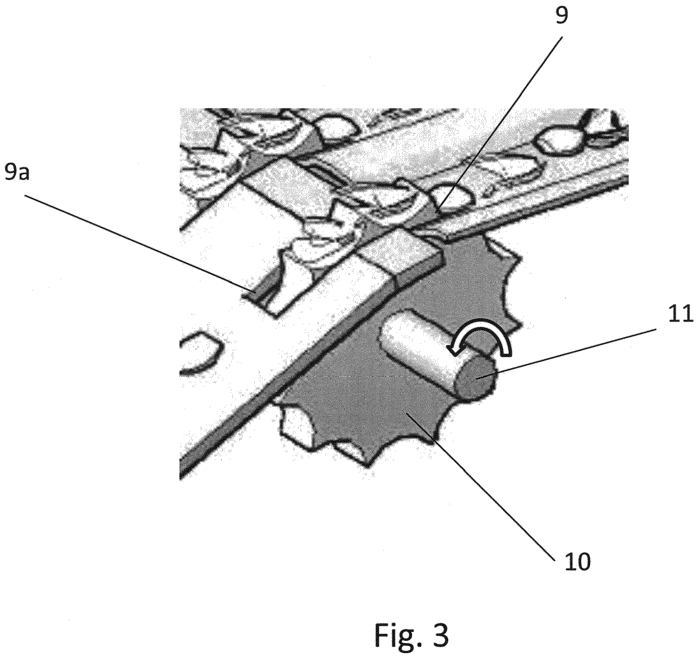

On the outlet edge, namely the edge from which fruits (3) and shells (4) go out of the vibrating plane (5), and next to the raceways (7), a plurality of notches (9) are made. From these notches (9), toothed wheels (10) emerge (Figure 3) assembled on a rotary shaft (11). The rotation of shaft and wheels is transmitted by a motor-variator with adjustable speed (not shown).

The vibration of the plane (5) generates the advancement of the fruits (3) and of the broken shells (4), which rest onto the toothed wheels (10). These toothed wheels (10), through the rotation along the direction shown by the arrow, transport the fruits (3) and the shells (4) from the vibrating plane (5) to a chute (12), also equipped, at a first end thereof, with notches (9a), from which the toothed wheels (10) emerge.

The toothed wheels (10), being assembled on the rotary shaft (11), rotate synchronously and, through the teeth, transport a row of grains (fruits and shells) for every row of teeth and transfer them onto the chute (12). In practice, the teeth of the toothed wheels (10) deposit in a sequence parallel rows of grains on the chute (12). The time between a row of grains deposited on the plane and the following one, avoids the collisions among grains and enables the right separation, this due to the fact that all grains are in contact with the surface of the chute (12).

The chute (12) is slanted by an angle α with respect to the horizontal and has a rough surface, so that the wooden shells (4) of the almonds, smooth and hard, by sliding on the chute (12), are subjected to a sliding friction lower than that to which the fruits (3) are subjected, which have a softer and more tender surface. It follows that, along the chute (12), the shells (4) will be subjected to a stronger acceleration that the fruits (3).

Due to the effect of a lower friction, the shells (4) slide with a greater speed that the fruits (3), which are much slower, so that, at the end of the chute (12), the fruits (3) will fall approximately vertical into a first vessel (13), while the shells (4), getting a higher speed, will fall further, into a second vessel (14). The effect is improved due to a further braking action, given by a small horizontal plane (15), adjustable in length, which also has a rough surface.

In order to better divide the flow of shells (4) from the flow of fruits (3) it is provided to use a separator (16), shaped as a reversed V. Thereby, the separation between shells (4) and fruits (3) is obtained, without damaging the end product. This separator (16) is adjustable along both a vertical and an horizontal direction, in order to make it go near to or far from the lower edge of the chute (12). The separator shaped as a reverse V can be of different shapes and with different adjustments, without departing from the scope of the invention.

Experiments have shown, for the chute (12), that, for values of α included between 25 and 30 degrees and a roughness included between 1 and 8 Ra µm, there follows the effect of maximizing the acceleration difference between fruits (3) and shells (4). The best results are anyway obtained with a slanting angle α = 27°. Such slant allows a rather moderate grain speed, to improve the friction difference between fruits and shells.

For the horizontal plane (15), the optimum value of roughness Ra is included between 2 and 6 µm.

## Claims

1. Device (1), adapted to separate fruits (3) from wooden shells (4) of almonds, after the almonds have been squashed by suitable shredding machines, of a type which provides for sliding said fruits (3) and said shells (4) on a rough surface adapted to differentiate a sliding speed of said fruits (3) from a sliding speed of said shells (4) so that said fruits (3) and said shells (4), by reaching the end of said rough surface at different speeds, are capable of performing jumps of different lengths, in order to be collected into vessels (13, 14) placed at different distances from an outlet edge of said rough surface, wherein:
- said rough surface comprises a chute (12), so that a sliding of said fruits (3) and broken shells (4) on said rough surface occurs with different sliding friction coefficients;
- means are provided which are adapted to deposit said fruits (3) and said broken shells (4) onto said chute (12), so that each fruit (3) and each broken shell (4) is in direct contact with the surface of said chute (12);
- a slant of said chute (12) and a different sliding friction of said fruits (3) and said broken shells (4) with the rough surface of said chute (12) having an effect of impressing a descent speed of said fruits (3) different from a descent speed of said broken shells (4);
**characterized in that** said means adapted to deposit said fruits (3) and said broken shells (4) onto said chute (12) comprise:
- a dosing device (6), adapted to deposit fruits (3) and shells (4), in a single layer, on a vibrating plane (5);
- said vibrating plane (5), substantially horizontal, adapted to advance said fruits (3) and said shells (4);
- means adapted to transfer said fruits (3) and said shells (4) from said vibrating plane (5) to said chute (12), keeping the arrangement in a single layer;
- said means adapted to transfer said fruits (3) and said shells (4) from said vibrating plane (5) to said chute (12), keeping the arrangement in a single layer, comprise a plurality of toothed wheels (10), placed next to an outlet edge of said vibrating plane (5), said toothed wheels (10) transporting, from said vibrating plane (5) to said chute (12), with enough time not to generate collisions between grains, fruits (3) and shells (4) which, advancing along the vibrating plane (5), rest onto the toothed wheels (10), said transport occurring through a rotation of said toothed wheels (10), said toothed wheels (10) being placed next to raceways (7) of the vibrating plane (5) and projecting from a plurality of notches (9, 9a) obtained respectively on facing edges of said vibrating plane (5) and said chute (12), said toothed wheels (10) being assembled on a rotary shaft (11) .

2. Device (1) according to claim 1, **characterized in that** said chute (12) has a slant α included between 25° and 30°.

3. Device (1) according to claim 2, **characterized in that** said chute (12) has a slant α = 27°.

4. Device (1) according to claim 1, **characterized in that** the surface of said chute (12) has a roughness Ra included between 1 and 8 µm.

5. Device (1) according to claim 4, **characterized in that** said vibrating plane (5) is equipped with small longitudinal channels (7), adapted to orderly guide fruits (3) and shells (4), pushed ahead by vibrations of said vibrating plane (5).

6. Device (1) according to at least one of claims 1 to 5, **characterized in that** it has a further horizontal plane (15), placed next to a lower edge of said chute (12), said horizontal plane (15) exerting a further braking action onto the fruits (3).

7. Device (1) according to claim 6, **characterized in that** said horizontal plane (15) is adjustable in length.

8. Device (1) according to claim 6, **characterized in that** the surface of said horizontal plane (15) has a roughness Ra included between 2 and 6 µm.

9. Device (1) according to at least one of claims 1 to 8, **characterized in that** it has a separator (16), shaped as a reverse V, adapted to divide a flow of fruits (3) from a flow of shells (4), said separator (16) being adjustable along both an horizontal and a vertical direction, in order to make it go near to and far from the lower edge of the chute (12), said separator having different shapes and different adjustments.

## Patentansprüche

1. Vorrichtung (1), die dazu dient, Trockenfrüchte (3) von den hölzernen Schalen (4) der Mandeln zu trennen, nachdem diese Mandeln von einer dazu bestimmten Schälmaschine geknackt wurden, die vorsieht, die genannten Trockenfrüchte (3) und die genannten Schalen (4) auf einer rauen Oberfläche gleiten zu lassen, die dazu dient, die Gleitgeschwindigkeit der genannten Trockenfrüchte (3) von der Gleitgeschwindigkeit der genannten Schalen (4) zu differenzieren, sodass diese mit unterschiedlichen Geschwindigkeiten am Ende der genannten rauen Oberfläche ankommen und fähig sind, Sprünge mit unterschiedlicher Länge auszuführen, um in Behältern (13, 14) gesammelt zu werden, die in unterschiedlichem Abstand von der Austrittskante der genannten rauen Oberfläche aufgestellt wurden, wo:
- die genannte raue Oberfläche eine Schrägfläche (12) enthält, sodass ein Gleiten der genannten Trockenfrüchte (3) und der kaputten Schalen (2) auf der genannten rauen Oberfläche mit unterschiedlichen Gleitreibungskoeffizienten erfolgt;
- Mittel vorgesehen sind, die dazu dienen, die genannten Trockenfrüchte (3) und die kaputten Schalen (4) auf die genannte Schrägfläche (12) zu legen, sodass jede Trockenfrucht (3) und jede kaputte Schale (4) in direktem Kontakt mit der genannten Schrägfläche (12) ist;
- die Neigung der genannten Fläche (12) und die unterschiedliche Gleitreibung der genannten Trockenfrüchte (3) und der kaputten Schalen (4) mit der rauen Oberfläche der genannten Schrägfläche (12) die Wirkung haben, eine andere Abwärtsgeschwindigkeit auf die genannten Trockenfrüchte (3) als auf die genannten kaputten Schalen (4) übertragen
und die **dadurch gekennzeichnet ist, dass** die genannten Mittel, die dazu dienen, die genannten Trockenfrüchte (3) und die kaputten Schalen (4) auf die genannte Schrägfläche (12) zu legen, Folgendes enthalten:
- einen Dosierer (6), der dazu dient, Trockenfrüchte (3) und Schalen (4) in nur einer Schicht auf eine Vibrationsfläche (5) zu legen;
- die genannte Vibrationsfläche (5), die grundlegend horizontal ist und dazu dient, die genannten Trockenfrüchte (3) und die genannten Schalen (4) vorzuschieben;
- Mittel, die dazu dienen, die genannten Trockenfrüchte (3) und die genannten Schalen (4) von der genannten Vibrationsfläche (5) auf die genannte Schrägfläche (12) zu übertragen, wobei sie die Anordnung in nur einer Schicht beibehalten;
- die genannten Mittel dienen dazu, die genannten Trockenfrüchte (3) und die genannten Schalen (4) von der genannten Vibrationsfläche (5) auf die genannte Schrägfläche (12) zu übertragen, wobei sie die Anordnung in nur einer Schicht beibehalten, sie enthalten mehrere Zahnräder (10), die an der Austrittskante der genannten Vibrationsfläche (5) positioniert sind, die genannten Zahnräder (10) transportieren die Trockenfrüchte (3) und die Schalen (4), die sich längs der Vibrationsfläche (5) vorschieben, von der genannten Vibrationsfläche (5) auf die genannte Schrägfläche (12) in einer ausreichenden Zeit, um keine Kollisionen zwischen den Körnern zu erzeugen, sie stützen sich an den Zahnrädern (10) ab, der genannte Transport erfolgt durch die Rotation der genannten Zahnräder (10), die genannten Zahnräder (10) sind an Kanälen (7) der Vibrationsfläche (5) positioniert und stehen aus mehreren Kerben (9, 9a) hervor, die jeweils an den Kanten erhalten wurden, welche auf gleicher Höhe mit der genannten Vibrationsfläche (5) und der Schrägfläche (12) liegen, die genannten Zahnräder (10) sind auf einer Drehwelle (11) montiert.

2. Vorrichtung (1) gemäß Patentanspruch 1, die **dadurch gekennzeichnet ist, dass** die genannte Fläche (12) eine Neigung α zwischen 25 und 30 Grad hat.

3. Vorrichtung (1) gemäß Patentanspruch 2, die **dadurch gekennzeichnet ist, dass** die genannte Fläche (12) eine Neigung α = 27° hat.

4. Vorrichtung (1) gemäß Patentanspruch 1, die **dadurch gekennzeichnet ist, dass** die genannte Fläche (12) eine Rauheit Ra zwischen 1 und 8 µm hat.

5. Vorrichtung (1) gemäß Patentanspruch 4, die **dadurch gekennzeichnet ist, dass** die genannte Vibrationsfläche (5) mit Längskanälen (7) versehen ist, die dazu dienen, die Trockenfrüchte (3) und Schalen (4) geordnet zu führen, welche durch die Vibrationen der genannten Vibrationsfläche (5) vorgeschoben werden.

6. Vorrichtung (1) gemäß mindestens einem der Patentansprüche von 1 bis 5, die **dadurch gekennzeichnet ist, dass** sie eine weitere horizontale Fläche (15) vorsieht, die an einer unteren Kante der genannten Schrägfläche (12) positioniert ist, die genannte horizontale Fläche (15) übt eine weitere bremsende Wirkung auf die Trockenfrüchte (3) aus.

7. Vorrichtung (1) gemäß Patentanspruch 6, die **dadurch gekennzeichnet ist, dass** die genannte horizontale Fläche (15) in der Länge verstellbar ist.

8. Vorrichtung (1) gemäß Patentanspruch 6, die **dadurch gekennzeichnet ist, dass** die genannte Oberfläche der genannten horizontalen Fläche (15) eine Rauheit Ra zwischen 2 und 6 µm hat.

9. Vorrichtung (1) gemäß mindestens einem der Patentansprüche von 1 bis 8, die **dadurch gekennzeichnet ist, dass** sie die Anwendung eines Abscheiders (16) in umgekehrter V-Form vorsieht, der dazu dient, den Fluss der Trockenfrüchte (3) vom Fluss der Schalen (4) zu trennen, der genannte Abscheider (16) ist in horizontaler und vertikaler Richtung verstellbar, um ihn von der unteren Kante der Schrägfläche (12) zu entfernen und an diese anzunähern, der genannte Abscheider in umgekehrter V-Form hat verschiedene Formen und verschiedene Einstellungen.

## Revendications

1. Dispositif (1), apte à séparer les fruits (3) des coques ligneuses (4) ; les amandes écrasées par un concasseur où les fruits (3) et les coques (4) glissent sur une surface rugueuse apte à appliquer une vitesse pour le glissement des fruits (3) et une autre vitesse pour le glissement des coques (4). Ainsi, les fruits (3) et les coques (4) arrivent sur la surface rugueuse à une vitesse différente et peuvent faire des sauts de longueur différente pour être récoltés dans le bac (13, 14) correspondant ; ces bacs sont placés à une distance différente du bord de sortie de la surface rugueuse, où :
- la surface rugueuse comprend un plan incliné (12), afin que les fruits (3) et les coques brisées (4) glissent sur la surface rugueuse avec des coefficients de frottement différents ;
- on a prévu des moyens aptes à poser les fruits (3) et les coques brisées (4) sur le plan incliné (12) pour que chaque fruit (3) et chaque coque brisée (4) soit en contact direct avec la surface du plan incliné (12) ;
- l'inclinaison du plan (12) et le frottement rasant des fruits (3) et des coques brisées (4) sur la surface rugueuse du plan incliné (12) ont pour effet d'appliquer une vitesse de descente des fruits (3) différente de la vitesse de descente des coques brisées (4)
**caractérisé en ce que** les moyens aptes à poser les fruits (3) et les coques brisées (4) sur le plan incliné (12) comprennent :
- un doseur (6) en mesure de poser les fruits (3) et les coques (4), en une seule couche, sur un plan vibrant (5) ;
- le plan vibrant (5), substantiellement horizontal apte à faire avancer les fruits (3) et les coques (4) ;
- des moyens à même de transférer les fruits (3) et les coques (4) depuis le plan vibrant (5) vers le plan incliné (12), tout en maintenant la position sur une seule couche ;
- les moyens aptes à transférer les fruits (3) et les coques (4) depuis le plan vibrant (5) vers le plan incliné (12), tout en maintenant la position sur une seule couche, comprennent une pluralité de roues dentées (10) positionnées sur le bord de sortie du plan vibrant (5) ; les roues dentées (10) transportent les fruits (3) et les coques (4) depuis le plan vibrant (5) vers le plan incliné (12) dans un délai évitant les collisions entre les grains ; les fruits (3) et les coques (4), qui avancent sur le plan vibrant (5), s'appuient sur les roues dentées (10), le transport se produit à travers la rotation des roues dentées (10) qui sont positionnées au niveau des rainures (7) du plan vibrant (5) et font saillie à partir d'une pluralité d'entailles (9, 9a) creusées respectivement sur les bords latéraux du plan vibrant (5) et du plan incliné (12) ; les roues dentées (10) sont montées sur un arbre tournant (11).

2. Dispositif (1), selon la revendication 1, **caractérisé en ce que** le plan (12) a une inclinaison α comprise entre 25 et 30 degrés.

3. Dispositif (1), selon la revendication 2, **caractérisé en ce que** le plan (12) a une inclinaison α = 27°.

4. Dispositif (1), selon la revendication 1, **caractérisé en ce que** la surface du plan incliné (12) a une rugosité Ra comprise entre 1 et 8 µm.

5. Dispositif (1), selon la revendication 4, **caractérisé en ce que** le plan vibrant (5) est doté de rainures longitudinales (7) aptes à guider de manière ordonnée les fruits (3) et les coques (4) qui sont poussés en avant par les vibrations du plan vibrant (5).

6. Dispositif (1), selon au moins l'une des revendications de 1 à 5, **caractérisé en ce qu'**il prévoit un autre plan horizontal (15), positionné sur le bord inférieur du plan incliné (12), qui exerce une ultérieure action freinante sur les fruits (3).

7. Dispositif (1), selon la revendication 6, **caractérisé en ce que** le plan horizontal (15) peut être réglé en longueur.

8. Dispositif (1), selon la revendication 6, **caractérisé en ce que** la surface du plan horizontal (15) a une rugosité Ra comprise entre 2 et 6 µm.

9. Dispositif (1), selon au moins l'une des revendications de 1 à 8, **caractérisé en ce qu'**il prévoit l'utilisation d'un séparateur (16), en forme de V inversé, apte à partager le flux des fruits (3) de celui des coques (4) ; le séparateur (16) peut être réglé en direction horizontale et verticale, afin de l'éloigner ou de le rapprocher du bord inférieur du plan incliné (12) ; le séparateur en forme de V inversé possède différentes formes et différents réglages.
